# EUROPEAN PATENT APPLICATION

(11) **EP 4 811 348 A1**
(43) Date of publication of application: **23.09.2026**
(21) Application number: 26162868.9
(22) Date of filing: 06.03.2026
(51) Int. Cl.: G09G 5/00

(54) **DISPLAY PROCESSING APPARATUS**

(30) Priority: 21.03.2025 JP 2025046444
(71) Applicant: Alps Alpine Co., Ltd., Ota-ku, Tokyo 145-8501 (JP)
(72) Inventor: Sasaki, Yuzo, Iwaki-city Fukushima (JP)
(74) Representative: Schmitt-Nilson Schraud Waibel Wohlfrom Patentanwälte Partnerschaft mbB

(57) **Abstract**

A display processing apparatus includes circuitry configured to execute link training for setting a transmission condition of video data prior to an operation of transmitting the video data from a transmitter to a receiver; detect an ambient temperature of at least one of the transmitter or the receiver; and set a transmission/reception interval of information in the link training based on the ambient temperature.

## Description

The present application is based on and claims priority to Japanese Patent Application No. 2025-046444, filed on March 21, 2025.

The present disclosure relates to a display processing apparatus.

Conventionally, there has been known a display system that includes a transmission device for transmitting video data and a display device for receiving the video data and displaying an image, which are connected to each other by using an interface conforming to the DP (Display Port, registered trademark) standard or the eDP (Embedded Display Port) standard as an interface (for example, see Patent Document 1). Link training for embedding a clock in the video data is executed between the transmission device and the display device at the time of startup or when a connection failure occurs.
Patent Document 1: JP 2018-112720A

Incidentally, in the link training performed between the devices disclosed in the above-mentioned Patent Document 1, an interval time (AUX RD Interval) which is an interval for transmitting and receiving information can be selected from among a plurality of types, and a short time is usually set as an initial value in order to shorten a time to start transmitting video data. On the other hand, when a connection failure occurs, for example, when the ambient temperature is extremely high or low, if the link training is performed with a short interval time, communication errors occur frequently in transmitting and receiving information, and the reconnection operation may not be stable. As a countermeasure for such a case, it is conceivable to lengthen the interval time. However, lengthening the interval time causes a problem in that the time until the start of transmission of video data increases, and the time until video is re-displayed following a connection failure increases.

The present disclosure has been conceived in view of the above, and it is an object of the present disclosure to provide a display processing apparatus capable of stabilizing the connection operation until the display of a video and shortening the time until the display.

The present disclosure relates to a display processing apparatus according to the appended claims. Embodiments are disclosed in the dependent claims. A display processing apparatus according to an aspect of the present disclosure includes circuitry configured to execute link training for setting a transmission condition of video data prior to an operation of transmitting the video data from a transmitter to a receiver; detect an ambient temperature of at least one of the transmitter or the receiver; and set a transmission/reception interval of information in the link training based on the ambient temperature.

Other objects and further features of the invention will be apparent from the following detailed description when read in conjunction with the accompanying drawings, in which:
FIG. 1 is a diagram illustrating the configuration of an in-vehicle system according to an embodiment;
FIG. 2 is a flow diagram illustrating an operation procedure for performing relink training according to an embodiment;
FIG. 3 is a flow diagram illustrating a detailed operation of a reset process in step 108 of FIG. 2 according to an embodiment; and
FIG. 4 is a sequence diagram of a transmission/reception operation including link training conforming to the eDP1.3 standard.

When the ambient temperature is extremely low or high beyond a regular use range, the information transmission/reception operation in the link training becomes unstable and a link break (communication disconnection) may occur during the link training, but this instability can be improved by changing the setting of the information transmission/reception interval according to the ambient temperature. Therefore, it is possible to stabilize the reconnection operation when a connection failure occurs and shorten the time until the video is re-displayed.

An in-vehicle system according to various embodiments will be described below with reference to the drawings.

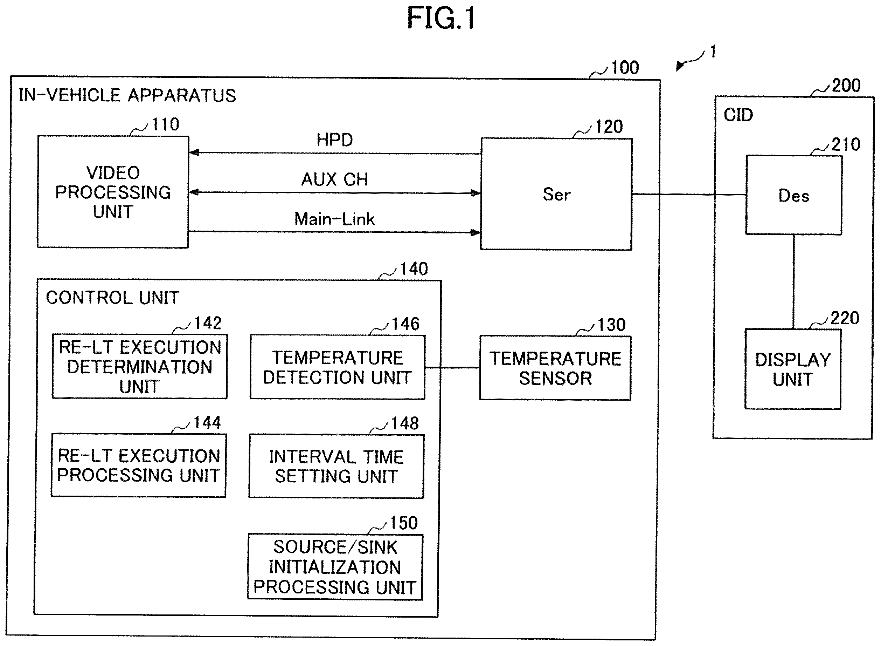

FIG. 1 is a diagram illustrating a configuration of an in-vehicle system according to an embodiment. An in-vehicle system 1 illustrated in FIG. 1 is housed in a dashboard of a vehicle, for example, and includes an in-vehicle apparatus 100 and a center information display (CID) 200.

The in-vehicle apparatus 100 is referred to as a head unit and has various processing functions such as audio/video replay processing, navigation processing, and Internet connection processing.

The center information display 200 displays a video corresponding to the video data output from the in-vehicle apparatus 100. In the present embodiment, video data in a serial format is transmitted and received between the in-vehicle apparatus 100 and the center information display 200 via a predetermined transmission line.

The center information display 200 includes a Des (deserializer) 210 and a display unit 220. The Des 210 converts the video data in a serial format sent from the in-vehicle apparatus 100 into video data in a parallel format suitable for display in pixel units. The video data is input to the display unit 220, and the corresponding video is displayed on the screen of the display unit 220. The display unit 220 may use a liquid crystal display (LCD), an organic EL (ElectroLuminescence) display, or the like, but is not limited thereto, and may use other types of display technologies.

The above-described in-vehicle apparatus 100 includes a video processing unit 110, a Ser (serializer) 120, a temperature sensor 130, and a control unit 140.

The video processing unit 110 executes the above-described various functions of the in-vehicle apparatus 100, and outputs video data and sound data as required. The Ser 120 receives the parallel-format video data output from the video processing unit 110, converts the parallel-format video data into serial-format video data, and outputs the serial-format video data to the center information display 200.

The temperature sensor 130 detects the ambient temperature of the Ser 120 and the video processing unit 110. For example, a temperature detecting element such as a thermistor is used. The temperature sensor 130 is arranged in the vicinity of the Ser 120 and/or the video processing unit 110, and a characteristic value corresponding to the temperature of the installation location is obtained from the temperature sensor 130. The control unit 140 controls the entire in-vehicle apparatus 100.

Incidentally, in the present embodiment, transmission/reception of video data between the video processing unit 110 and the Ser 120 is performed in conformity with the eDP (Embedded Display Port) 1.3 standard, which defines a procedure for transmission/reception of video data between a source (the video processing unit 110) and a sink (the Ser 120). The connection interface conforming to this standard includes a main link (Main-Link) for transmitting and receiving video data, an auxiliary channel (AUX CH), and a hot-plug detection channel (HPD).

According to this standard, link training for embedding a clock in video data is performed between the video processing unit 110 and the Ser 120 prior to transmission and reception of video data immediately after startup of the in-vehicle apparatus 100 or upon reconnection after a connection failure occurs between the video processing unit 110 and the Ser 120.

In the present embodiment, attention is paid to the operation when a connection failure occurs between the video processing unit 110 and the Ser 120 during operation of the in-vehicle apparatus 100, and the time required for link training (relink training) after a failure occurs is shortened.

In order to perform relink training, the control unit 140 of the present embodiment includes a re-LT (link training) execution determination unit 142, a re-LT execution processing unit 144, a temperature detection unit 146, an interval time setting unit 148, and a source/sink initialization processing unit 150. The re-LT (link training) execution determination unit 142, the re-LT execution processing unit 144, the temperature detection unit 146, the interval time setting unit 148, and the source/sink initialization processing unit 150 are an electronic circuit (including processor) such as a CPU, a GPU, a DSP, an FPGA, and an ASIC, which executes various processing described in the present disclosure by executing instruction codes stored in a memory or by designing a circuit for a special application.

When a connection failure occurs, the re-LT execution determination unit 142 determines whether or not link training can be executed based on the status information of the video processing unit 110 and the Ser 120.

When a connection failure occurs, the re-LT execution processing unit 144 executes link training. For the interval time (AUX RD Interval) used in this link training, there are cases in which a minimum value as an initial value is used and cases in which a larger value is used, and the interval time is selected depending on the ambient temperature of the use environment. Specific examples will be described below.

The temperature detection unit 146 uses the temperature sensor 130 to detect the ambient temperature where the temperature sensor 130 is installed.

When a connection failure occurs, the interval time setting unit 148 sets the interval time corresponding to the temperature detected by the temperature detection unit 146. For example, when the temperature is in the range of -10 °C to 60 °C, the interval time is set to the minimum initial value (100 µs/400 µs). When the temperature is 60 °C or higher, the interval time is set to 8 ms. When the temperature is -10 °C or lower, the interval time is set to 16 ms.

The source/sink initialization processing unit 150 initializes the video processing unit 110 (source) and the Ser 120 by using the interval time set by the interval time setting unit 148.

The above-described video processing unit 110 corresponds to the transmission unit, the Ser 120 corresponds to the reception unit, the video processing unit 110, the Ser 120, and the re-LT execution processing unit 144 correspond to the link training processing unit, the temperature sensor 130 and the temperature detection unit 146 correspond to the temperature detection unit, and the interval time setting unit 148 and the source/sink initialization processing unit 150 correspond to the transmission/reception interval setting unit.

The in-vehicle apparatus 100 of the present embodiment has such a configuration, and a description will now be given of shortening the required time when re-link training is performed due to a connection failure occurring between the video processing unit 110 and the Ser 120.

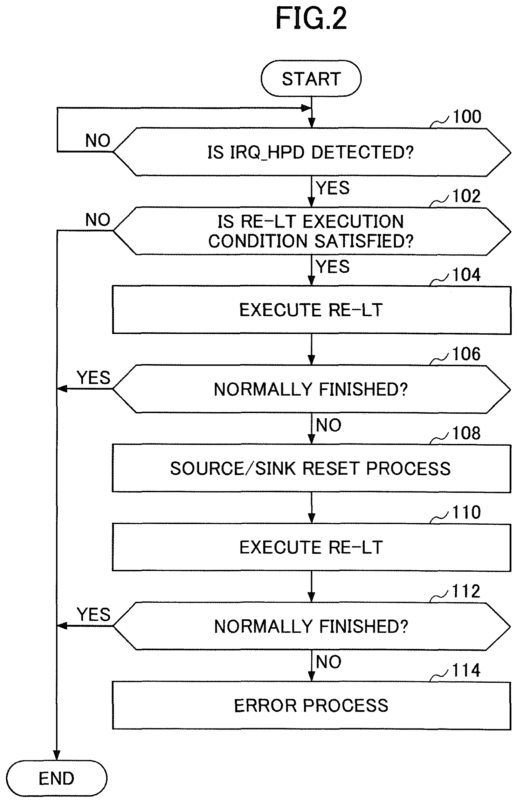

FIG. 2 is a flowchart illustrating an operation procedure for performing re-link training according to an embodiment.

When the in-vehicle apparatus 100 is activated, link training is performed between the video processing unit 110 and the Ser 120 by using the auxiliary channel, and then video data is output from the video processing unit 110 to the Ser 120 via the main link. In parallel with this operation, the re-LT execution determination unit 142 determines whether or not a hot plug has been detected in the video processing unit 110 (step 100). When a connection failure occurs, a hot plug (IRQ_HPD) is output from the Ser 120 to the video processing unit 110 via the hot plug detection channel (in order to change a hot plug detection channel in which the Ser 120 is maintained at a high level to a low level for a prescribed period). When the video processing unit 110 detects IRQ_HPD transmitted via the hot plug detection channel, the video processing unit 110 notifies the re-LT execution determination unit 142 in the control unit 140 to that effect. If there is no such notification, a negative determination is made, and the determination in step 100 is repeated.

When this notification is output from the video processing unit 110, the re-LT execution determination unit 142 makes an affirmative determination. Next, the re-LT execution determination unit 142 reads the status information of the video processing unit 110 and the Ser 120, confirms the state, and determines whether the condition for performing link training is satisfied (step 102). If satisfied, an affirmative determination is made.

Next, the re-LT execution processing unit 144 executes link training (step 104). The first link training executed here is executed with the same setting contents as the link training executed when the in-vehicle apparatus 100 is activated. For example, a minimum interval time (AUX RD Interval) as an initial value is set, and the link training is executed.

Next, the re-LT execution processing unit 144 determines whether or not the link training is normally finished (step 106). When the link training is normally finished, an affirmative determination is made. In this case, the link training when the connection failure occurs is finished. Note that the link training executed in step 104 is the same as the link training conventionally performed.

If the link training at step 104 is not normally finished, a negative determination is made at step 106.

When the in-vehicle apparatus 100 is used under a regular use environment, it is considered that the link training performed when the connection failure occurs is normally finished in many cases. However, if the use environment is far from a regular use environment, and the link training is performed with the minimum interval time maintained, a link disconnection may occur, and the link training may not be normally finished. For example, when the use temperature (ambient temperature) in a range of -10 °C to 60 °C is regarded as a normal use environment, if the ambient temperature falls outside this range, it is desirable to set the interval time to be longer in order to avoid link disconnection during link training.

Next, the re-LT execution processing unit 144 performs a source/sink reset processing for performing the link training by changing the setting of the interval time according to the temperature (step 108).

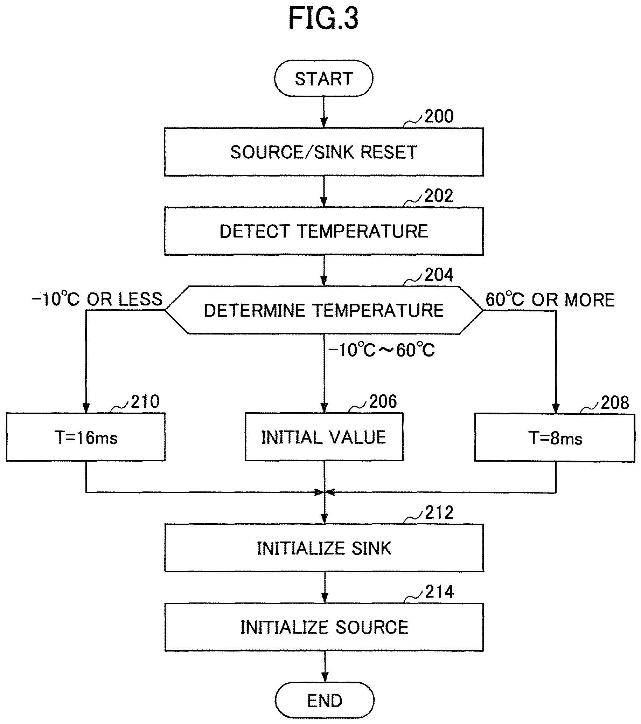

FIG. 3 is a flowchart illustrating the detailed operation of the reset processing in step 108 of FIG. 2 according to an embodiment. First, the re-LT execution processing unit 144 resets each of the video processing unit 110 (source) and the Ser 120 (sink) (step 200). Further, the temperature detection unit 146 fetches the characteristic value of the temperature sensor 130 and detects the use temperature of the Ser 120 and the video processing unit 110 (step 202). The temperature detection operation need not be performed after the reset operation in step 200, but may be performed in parallel or before the reset operation.

Next, the interval time setting unit 148 determines the detected temperature (step 204). For example, it is determined whether the detected temperature is within a range of -10 °C or lower, -10 °C to 60 °C, or 60 °C or higher.

Then, the interval time setting unit 148 determines the interval time (AUX RD Interval) T to an initial value (100 µs/400 µs) when the temperature is - 10 °C to 60 °C (corresponding to a situation of a regular use environment) (step 206). Further, the interval time setting unit 148 determines the interval time T to be 8 ms when the temperature is 60 °C or higher (corresponding to a situation of a high-temperature environment) (step 208). Further, the interval time setting unit 148 determines the interval time T to be 16 ms when the temperature is -10 °C or lower (corresponding to a situation of a low-temperature environment) (step 210).

After completing the setting of the interval time T, the source/sink initialization processing unit 150 initializes the Ser 120 (sink) (step 212) and initializes the video processing unit 110 (source) (step 214) by using the determined interval time T.

After the reset processing of the video processing unit 110 and the Ser 120 is finished (step 108), the re-LT execution processing unit 144 executes link training in consideration of the use temperature (step 110). In the link training performed here, under a high-temperature environment of 60 °C or higher or a low-temperature environment of -10 °C or lower, the link training is performed with an interval time T longer than that of the link training performed when the in-vehicle apparatus 100 is activated.

Next, the re-LT execution processing unit 144 determines whether or not the link training is finished normally (step 112). If the link training is finished normally, an affirmative determination is made. In this case, the link training when the connection failure occurs is finished. If the link training is not finished normally, a negative determination is made, and predetermined error processing is performed (step 114). For example, an error message by voice and/or image is output.

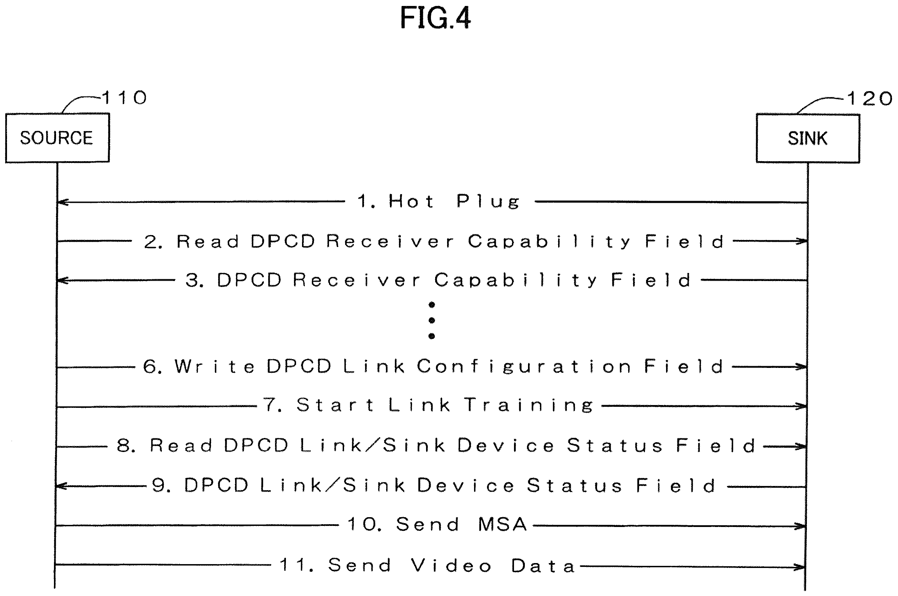

FIG. 4 is a sequence diagram of a transmission/reception operation including link training conforming to the eDP1.3 standard.

"1. Hot Plug" is a step of detecting a hot plug (IRQ_HPD) output from the Ser 120.

"2. Read DPCD Receiver Capability Field" is a step at which the video processing unit 110 instructs the Ser 120 to read the display port register DPCD (DisplayPort Configuration Data).

"3. DPCD Receiver Capability Field" is a step of outputting the contents of the display port register DPCD read by the Ser 120 to the video processing unit 110.

"6. Write DPCD Link Configuration Field" is a step at which the video processing unit 110 instructs the Ser 120 to write data into the display port register DPCD.

"7. Start Link Training" is a step at which the video processing unit 110 instructs the Ser 120 to start link training.

"8. Read DPCD Link/Sink Device Status Field" is a step at which the video processing unit 110 instructs the Ser 120 to collect the status of the display port register DPCD, the main link, and the Ser 120 in link training.

"9. DPCD Link/Sink Device Status Field" is a step of outputting the information collected by the Ser 120 to the video processing unit 110.

"10. Send MSA" is a step at which the video processing unit 110 instructs the Ser 120 to specify the attribute of the main link.

"11. Send Video DATA" is a step of transmitting video data from the video processing unit 110 to the Ser 120 through the main link.

The operations from "2." to "9." in the above-described sequence correspond to link training, and the time between "7." and "8." is set as the interval time (AUX RD Interval) T. The operations from "7." to "9." are performed once or a plurality of times (maximum 5 times until completion) as a clock recovery process (clock recovery phase) for embedding a clock in the video data, and then are performed once or a plurality of times (maximum 5 times until completion) as an equalization process (equalization phase) for performing phase equalization after embedding a clock in the video data.

Incidentally, the interval time T is set to an initial value in the link training immediately after activating the in-vehicle apparatus 100 or in the first link training after the occurrence of the connection failure (step 104 in FIG. 2). This initial value is 100 µs for the clock recovery process and 400 µs for the equalization process.

On the other hand, in the second link training after the occurrence of the connection failure (step 110 in FIG. 2), the interval time T is set according to the temperature.

Specifically, when the temperature is between -10 °C and 60 °C, the initial value is used as the interval time T, that is, 100 µs for the clock recovery process and 400 µs for the equalization process (step 206 in FIG. 3). When the temperature is 60 °C or higher, 8 ms is used as the interval time T for the clock recovery process and the equalization process (step 208 in FIG. 3). When the temperature is -10 °C or lower, 16 ms is used as the interval time T for the clock recovery process and the equalization process (step 210 in FIG. 3).

When the ambient temperature is extremely low or high beyond the regular use range, the information transmission/reception operation in the link training becomes unstable and a link break (communication disconnection) may occur in the middle of the processing. However, in the in-vehicle apparatus 100 of the present embodiment, this instability can be improved by changing the setting of the information transmission/reception interval (interval time) in accordance with the ambient temperature. Therefore, it is possible to stabilize the reconnection operation when the connection failure occurs and to shorten the time until the redisplay of the video.

In particular, in the link training, by appropriately lengthening the time required for the clock recovery process and the equalization process which are repeated once or a plurality of times in accordance with the temperature, it is possible to reliably implement the stabilization of the reconnection operation.

Further, when the ambient temperature is in a low-temperature state lower than the predetermined range (-10 °C to 60 °C) or in a high-temperature state higher than the predetermined range, an interval time longer than the interval time (initial value) corresponding to the predetermined range is set. Thus, it is possible to reliably implement the stabilization of the reconnection operation under a high-temperature environment or a low-temperature environment exceeding the regular use environment.

When the ambient temperature is within a predetermined range (-10 °C to 60 °C), a short interval time (initial value) is used for link training performed in a regular operation other than when a connection failure occurs. Thus, when a connection failure occurs under a regular use environment, link training similar to the conventional link training can be performed, and a prolonged time until redisplay of the video can be avoided.

Further, the interval time is changed in the second and subsequent link training performed after the connection failure occurs. Thus, even when a connection failure occurs, if the first link training similar to the conventional link training is successful, the time required for link training does not need to be prolonged, and the time until redisplay of the video can be shortened.

Note that the present disclosure is not limited to the above-described embodiments, and various modifications can be made within the scope of the claims. In the above-described embodiments, the case in which the in-vehicle apparatus 100 is provided with the video processing unit 110 as a source and the Ser 120 as a sink conforming to the eDP1.3 standard has been described, but the present disclosure may be applied to link training when video data is transmitted and received conforming to an eDP standard other than the eDP1.3 standard.

Further, the video processing unit 110 and the Ser 120 need not necessarily be provided in the in-vehicle apparatus 100, but may be provided as separate devices, and the present disclosure may be applied to link training when video data is transmitted and received between them. In this case, other DP standards or other standards may be adopted instead of the eDP standard.

Further, in the above-described embodiments, the detected use temperature (ambient temperature) is classified into -10 °C to 60 °C and the others, but the boundary temperature to be classified into these ranges may be other than - 10 °C and 60 °C. Further, the interval time T set corresponding to each temperature is set to an initial value, 8 ms, and 16 ms, but these values may be changed as appropriate. In the eDP1.3 standard, 4 ms, 8 ms, 12 ms, and 16 ms can be selected as the interval time T in addition to the initial value (100 µs/400 µs). For example, the interval time T may be set to 4 ms when the temperature is -10 °C to 60 °C, and may be selected from the other values including 8 ms, 12 ms, and 16 ms when the temperature is -10 °C or lower or 60 °C or higher.

Further, in the above-described embodiments, the in-vehicle apparatus 100 has been described, but the present disclosure may be applied to a display system other than being in-vehicle.

Further, in the above-described embodiments, the interval time T in the link training after the occurrence of the connection failure is variably set according to the ambient temperature, but the interval time T in the link training may be variably set according to the ambient temperature regardless of the occurrence of the connection failure.

## Claims

1. A display processing apparatus comprising:
circuitry configured to
execute link training for setting a transmission condition of video data prior to an operation of transmitting the video data from a transmitter to a receiver;
detect an ambient temperature of at least one of the transmitter or the receiver; and
set a transmission/reception interval of information in the link training based on the ambient temperature.

2. The display processing apparatus according to claim 1, wherein the circuitry is configured to set the transmission/reception interval for the link training to be executed after a connection failure occurs between the transmitter and the receiver.

3. The display processing apparatus according to claim 1 or 2, wherein the transmission/reception interval set by the circuitry is an interval time of the information when a clock recovery process is executed in the link training.

4. The display processing apparatus according to one of claims 1 to 3, wherein the transmission/reception interval set by the circuitry is an interval time of the information when an equalization process is executed in the link training.

5. The display processing apparatus according to one of claims 1 to 4, wherein the circuitry is configured to set a transmission/reception interval that is longer than a transmission/reception interval corresponding to a predetermined range when the ambient temperature is in a high-temperature state exceeding the predetermined range or a low-temperature state lower than the predetermined range.

6. The display processing apparatus according to one of claims 1 to 5, wherein the circuitry is configured to use a transmission/reception interval that is an initial value used in the link training executed in a regular operation other than when the connection failure occurs, when the ambient temperature is within a predetermined range.

7. The display processing apparatus according to one of claims 1 to 6, wherein a content of the transmission/reception interval set by the circuitry is used in the link training that is executed in second and subsequent instances executed after the connection failure occurs between the transmitter and the receiver.

8. The display processing apparatus according to one of claims 1 to 7, wherein transmission/reception of the video data is performed in conformity with a display port (registered trademark) standard.
